# EUROPÄISCHE PATENTSCHRIFT

(11) **EP 2 607 274 B1**
(45) Veröffentlichungstag und Bekanntmachung des Hinweises auf die Patenterteilung: **13.08.2014**
(21) Anmeldenummer: 11194881.6
(22) Anmeldetag: 21.12.2011
(51) Int. Cl.: B65G 53/14, B65G 53/24, B65G 53/60

(54) **Granulatabscheider und Druckluftförderanlage mit Granulatabscheider**
Separator for granular material and compressed air supply device with separator for granular material
Séparateur pour granules et installation d'alimentation en air comprimé avec séparateur pour granules

(43) Veröffentlichungstag der Anmeldung: 26.06.2013
(73) Patentinhaber: Wilhelm, Klaus, 83026 Rosenheim (DE)
(72) Erfinder: Wilhelm, Klaus, 83026 Rosenheim (DE)
(74) Vertreter: Alber, Norbert

(56) Entgegenhaltungen:
- EP-A1- 2 045 199
- WO-A1-2005/102882
- DE-A1- 2 709 746
- DE-A1- 3 805 531
- DE-U1- 20 100 972
- DE-U1- 29 815 528
- GB-A- 2 096 965
- NL-A- 7 712 041

## Beschreibung

### I. Anwendungsgebiet

Die Erfindung betrifft Druckluftförderanlagen für Schüttgut und die dabei verwendeten Granulatabscheider.

### II. Technischer Hintergrund

Vor allem in der Kunststofftechnik, aber auch in der Pharmazie- und der Lebensmitteltechnologie, müssen häufig z. B. Rohmaterialien in Form von Granulaten oder Mahlgütern in Rohrleitungen transportiert werden. Hierfür stehen unterschiedliche Technologien zur Verfügung. Eine der bekanntesten ist die Druckluft-Fördertechnik. Im Folgenden wird nur noch vom Granulat gesprochen, obwohl weiterhin ebenso Mahlgut darunter verstanden werden soll.

Dabei wird eine Sauglanze in den Vorratsbehälter mit Granulat eingesteckt, zum Beispiel, durch das Einblasen von Druckluft, meist mit mehr als 1 bar Überdruck, in diese Sauglanze wird in Förderrichtung eine Sogwirkung in der Sauglanze bewirkt, die das Granulat einsaugt und in die angeschlossene Rohrleitung mitreißt.

Am Zielort angekommen, muss die Transportluft vom Transportgut wieder getrennt werden, was durch sogenannte Abscheider geschieht.

Die Transportluft wird über einen Filter zurück in die Umgebung geleitet, während das Transportgut, z. B. Granulat oder Mahlgut im Abscheider nach unten fällt und meist schwerkraftbedingt einen darunter angeordneten Verbraucher, beispielsweise einem Granulattrockner oder direkt einer Kunststoffspritzmaschine, zugeführt wird.

Ein Problem bei Granulaten und Mahlgütern, wie sie insbesondere beim Recycling von Wertstoffen anfallen, ist der darin vorhandene Staubanteil:

Der Staubanteil bereitet sowohl in der Verarbeitung Probleme, indem er beispielsweise in einer Kunststoffspritzmaschine ein anderes Aufschmelzverhalten zeigt als die regulären Granulatkörner. Des Weiteren behindert der Staub durch seine Ablagerung den Einsatz von optischen oder kapazitiven Füllstandssensoren und vor allem verstopft der Staub sehr schnell die vorhandenen Filter zum Abführen der Förderluft, so dass diese regelmäßig gereinigt oder ersetzt werden müssen.

Nicht zuletzt ist der Staubanteil abhängig vom Material und ist auch eine ständige Explosionsgefahr, falls zündfähige Verhältnisse auftreten können.

Zunächst wäre es nahe liegend, unmittelbar beim Entnehmen des Granulates aus dem Vorratsbehälter den Staubanteil daraus zu entfernen, so dass im weiteren Förderweg die staubbedingten Probleme dann nicht mehr auftreten sollten.

Dies ist jedoch nicht ausreichend, da durch die Förderung selbst, also die Reibung der Granulatpartikel aneinander sowie an den Rohrleitungswänden etc., selbst bei einem ursprünglich staubfreien Granulat im Wege der Förderung und weiteren Handhabung wieder Staub entsteht, so dass vor allem noch einmal unmittelbar vor den Verbrauchern dieser Granulate eine vollständige Entstaubung auf einfache Art und Weise benötigt wird.

Die bisher verwendeten Abscheider, also Granulatabscheider von der Förderluft, bestehen meist aus aufrecht stehenden zylindrischen Gehäusen, in die seitlich die Saugleitung mit Granulat und Förderluft mündet.

Im Deckenbereich des Abscheiders ist ein Filter angeordnet, durch den die Förderluft in die Umgebung entlassen wird, während diese Sperre - meist auch noch ein zusätzliches, unter dem Filter angeordnetes gröberes Gitter - vom Transportgut nicht passiert werden kann und die Granulatkörner im Abscheider nach unten fallen und diesen durch die untere Auslassöffnung zum Verbraucher hin verlassen.

Dadurch setzt sich an dem Sieb bzw. Filter im Deckenbereich zunehmend Staub an, bis dieser manuell oder durch Druckluft gereinigt wird oder auch von selbst herabfällt. Jedoch fällt der abgelagerte Staub dann wiederum nach unten in das Granulat und wird zusammen mit dem Granulat ebenfalls dem Verbraucher zugeführt.

Somit erfolgt nur eine Reinigung der Transportluft, nicht des Granulates.

In diesem Zusammenhang ist als nächstreichender Stand der Technik die den Oberbegriff des Anspruchs 1 offenbarende EP 20 45199 A1 bekannt, deren Granulatabschneider im Wesentlichen aus einem Granulat-Sammelbereich, einem Sieb, einer Staubleitung, einem Staubsammelbehälter mit Filter und einem Transportejektor besteht. Dort ist der Granulat-Sammelbereich bereits unterteilt in einen Granulat-Zwischenbehälter mit einer unteren Granulat-Öffnung und einem darunter angeordneten Granulat-Endbehälter, die über einen Zwischenverschluss voneinander getrennt werden können.

Die beiden Behälter stellen jedoch eine bauliche Einheit dar.

Aus der DE 201 00 972 U1 ist ein Granulatabscheider bekannt, der einen Granulat-Sammelbereich mit einem Granulat-Endbehälter, einem Sieb, einer Staubleitung, einem Staubsammelbehälter mit einem Filter umfasst. Dem Filter ist das Sieb vorgelagert.

Aus der NL 771 2041 ist ein Transportejektor als Vakuumquelle bekannt.

### III. Darstellung der Erfindung

### a) Technische Aufgabe

Es ist daher die Aufgabe gemäß der Erfindung, einen Granulatabscheider mit einer Staubabscheidung zu schaffen, der einfach und mit wenig Aufwand zu betreiben ist und den Staub zuverlässig von dem Granulat trennt.

Die Aufgabe des erfindungsgemäßen Granulatabscheiders bzw. der gesamten Druckluft-Förderanlage, in der sich dieser Granulatabscheider befindet, besteht auch darin, dass im Granulatabscheider lediglich das Granulat abgeschieden wird, der Staubanteil jedoch zusammen mit der Förderluft abgeführt und abseits vom Granulatsammelbereich erst der Staubanteil von der Förderluft getrennt wird.

### b) Lösung der Aufgabe

Die Aufgabe wird erfindungsgemäß durch einen Granulatabscheider mit den Merkmalen des Anspruchs 1 gelöst.

Es hat sich gezeigt, dass es sinnvoll ist, dem Granulatsammelbereich in Form eines oberen Granulat-Zwischenbehälter einen darunter befindlichen Granulat-Endbehälter hinzuzufügen, die beide von einem zwangsgesteuerten Zwischenverschluss, z. B. einer Granulatklappe oder einem Granulatschieber, voneinander getrennt werden können.

Auf diese Art und Weise kann - bei dicht geschlossener Granulatklappe - in dem unteren Granulat-Endbehälter ein Vorrat an Granulat vorgehalten werden, während im darüber liegenden Granulat-Zwischenbehälter bereits wieder eine Abscheidung von Granulat aus der Transportluft durchgeführt wird.

Desweiteren ist der obere Teil des Abscheiders, also der Granulat-Zwischenbehälter, wegklappbar gegenüber dem unteren Teil, dem Granulat-Endbehälter, was um eine horizontal liegende Achse geschieht. Dadurch sind von der Aufklappstelle her beide Teile gut zugänglich für Reinigungs- und Reparaturarbeiten.

Die Granulatklappe wird im geschlossenen Zustand vorzugsweise von unten her an die Einfassungen der Granulatöffnung angelegt, und die Bewegung des Zwischenverschlusses, insbesondere der Granulatklappe, wird vorzugsweise bewirkt mittels eines druckluftbetriebenen Pneumatikzylinders.

Um eine möglichst gute Entstaubung des Fördergutes im Abscheider zu bewirken, ist in der Wand und/oder der Granulatklappe des Granulatzwischenbehälters, wenigstens ein Aufwirbelungs-Ejektor angeordnet, die ebenfalls mittels Druckluft betrieben wird, sodass durch Einschießen von Druckluft das dortige Granulat durcheinander gewirbelt wird und an dem Granulat haftender Staub frei wird und durch den herrschenden Unterdruck in Richtung Filter abgesaugt werden kann.

Vorzugsweise ist dabei dieser Aufwirbelungs-Ejektor in einer Wand des Granulatzwischenbehälters angeordnet und auf die gegenüberliegende Wand gerichtet, die zu diesem Zweck schräg gestellt ist, so dass sich ein nach unten konisch verjüngender Bereich ergibt und die aufgestrahlte Druckluft nach oben umgelenkt wird, sodass auch bei sehr tief angeordnetem Aufwirbelungs-Ejektor der gesamte darüber liegende Raum des zum Beispiel Granulatzwischenbehälters durchwirbelt wird.

Dabei werden der Aufwirbelungs-Ejektor und der Transportejektor vorzugsweise mittels eines einzigen Ventils über eine Leitungsverzweigung angesteuert, was die Anzahl der benötigten Ventile reduziert, aber keine Funktionseinschränkungen bedeutet, da immer dann, wenn Granulat aufgewirbelt wird zum Zwecke der Entstaubung in der Staubleitung auch der entsprechende Unterdruck vorhanden sein muss.

Vorzugsweise müssen dabei bestimmte Größenverhältnisse eingehalten werden:

So sollte die Querschnittsfläche der Staubleitung mindestens um den Faktor 1,0, besser mindestens um den Faktor 1,2, größer als die Querschnittsfläche der in den Abscheider hineinführenden Förderleitung, insbesondere jedoch höchstens um den Faktor 7,0, besser höchstens um den Faktor 2,5 sein.

Stattdessen und/oder zusätzlich sollte der freie Versorgungsquerschnitt, z. B. die Drossel, für den Transportejektor mindestens um den Faktor 1,2, besser mindestens um den Faktor 1,5, größer als die Querschnittsfläche des Aufwirbelungs-Ejektors, insbesondere jedoch höchstens um den Faktor 3,0, besser höchstens um den Faktor 2,0 sein.

Zusätzlich ist vorzugsweise die Oberseite des Abscheiders, insbesondere der Granulat-Zwischenbehälter, von einem abnehmbaren Deckel verschlossen, der z.B. mittels einfacher Spannverschlüsse fixiert werden kann. Dabei münden wenigstens eine Förderleitung vorzugsweise in dem abnehmbaren Deckel, an dem entsprechende Stutzen angeschweißt sind, auf die Schläuche leicht aufsteckbar und fixierbar sind.

Die in dem Granulatsammelbereich liegenden freien Enden der wenigstens einen Förderleitung sind durch schwerkraftbetätigte Verschlussklappen verschließbar, die automatisch schließen, sobald keine Förderluft aus der Förderleitung strömt.

Das Sieb befindet sich am Übergang vom Granulatsammelbereich zur Staubleitung und ist auf der Außenseite des Gehäuses des Granulatsammelbereiches, also insbesondere des Granulat-Zwischenbehälters in einem leicht demontierbaren, dicht anliegenden Rahmen auswechselbar befestigt, sodass durch Auswechseln gegen ein Sieb mit anderer Maschengröße der Kunde entscheiden kann, welche Granulatgröße noch abgeschieden wird und welche durch das Sieb durchgelassen wird.

Bei einem Sammelbereich mit einem Granulat-Endbehälter münden sowohl die Förderleitung als auch die Staubleitung immer in den Granulat-Zwischenbehälter.

Sofern unterschiedliche Fördergüter gefördert und im Granulatabscheider gemischt werden sollen, können zwei oder auch mehr Förderleitungen im gleichen Granulatabscheider, insbesondere im Granulat-Zwischenbehälter, münden.

Mit Hilfe des beschriebenen Granulatabscheiders kann somit eine druckluftbetriebene Förderanlage für Granulate und Mahlgute gemäß Anspruch 10 erstellt werden, die außer dem Granulatabscheider wie oben beschrieben eine Sauglanze, eine Druckluftquelle und eine diese beiden Teile verbindende Förderleitung benötigt.

### c) Ausführungsbeispiele

Ausführungsformen gemäß der Erfindung sind im Folgenden beispielhaft näher beschrieben. Es zeigen:
- Fig. 1a,b:: den Granulatabscheider in der Seitenansicht in unterschiedlichen Betriebszuständen,
- Fig. 2: den Granulatabscheider von vorne,
- Fig. 3a,b:: eine Druckluftförderanlage unter Verwendung des Granulatabscheiders der Figuren 1 und 2 in verschiedenen Betriebszuständen und
- Fig. 4: eine Druckluftförderanlage mit anderem Aufbau ebenfalls unter Verwendung des Granulatabscheiders der Figuren 1 und 2.

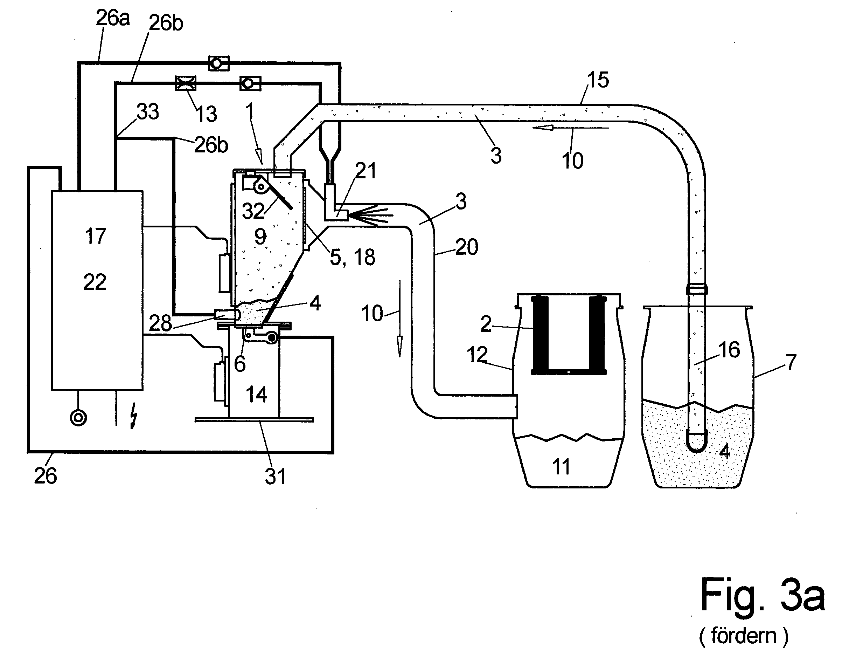

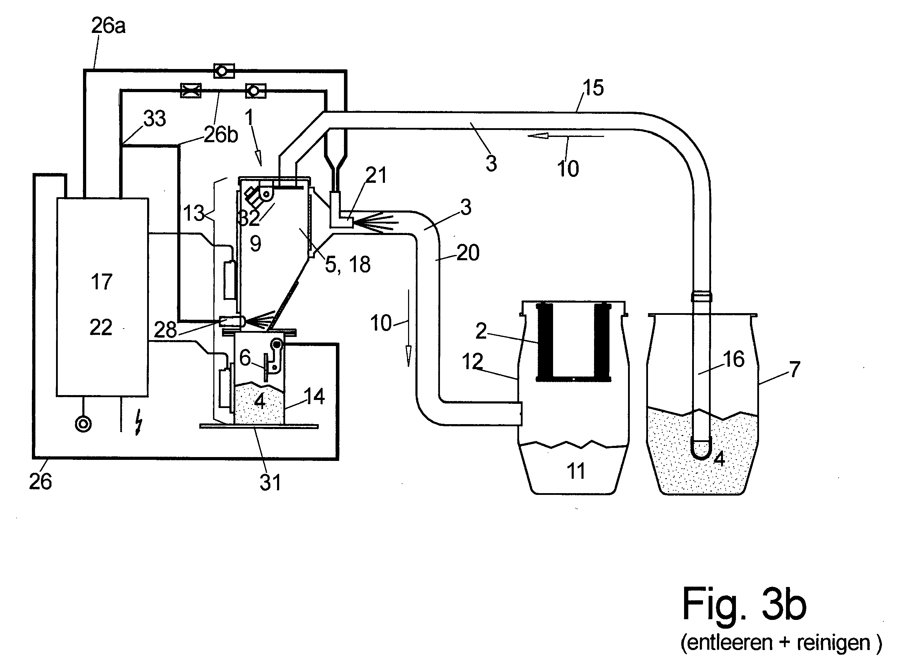

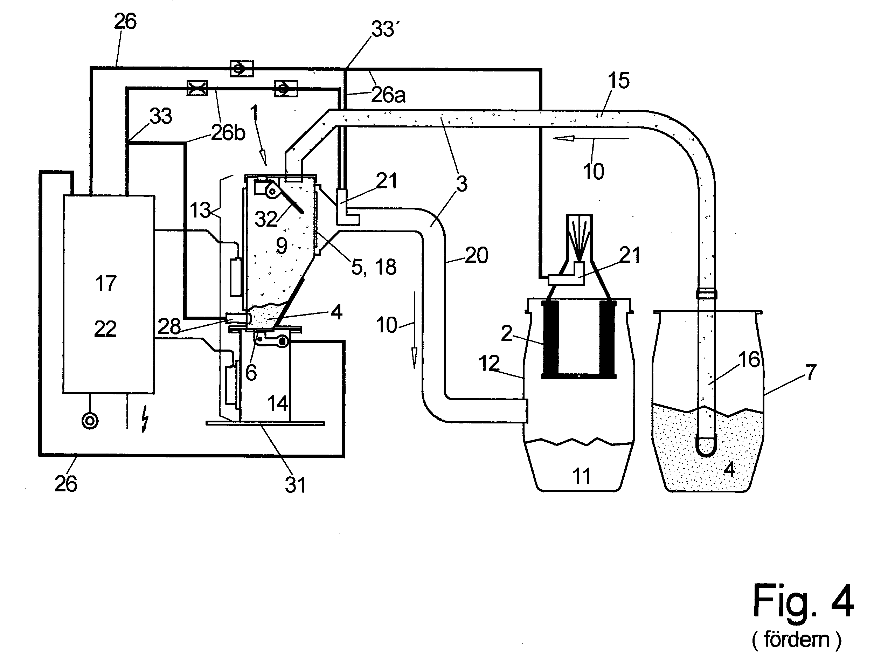

Zunächst soll anhand der **Figuren 3** **und** **4** ein typischer Einsatzzweck des erfindungsgemäßen Granulatabscheiders dargestellt werden:

Der primäre Zweck besteht darin - wie in Fig. 3a dargestellt - ein z.B. Granulat 4 an einen gewünschten Ort zu befördern.

Das Granulat 4 wird dabei in einem oben offenen Vorratsbehälter 7, beispielsweise einem Sack oder einem Fass, angeliefert und das Granulat soll in der benötigten Menge zum Beispiel einer Kunststoffspritzgussmaschine oder zuvor einem Granulattrockner zugeführt werden.

Dabei besteht häufig die Notwendigkeit, aus mehreren zur Verfügung stehenden Vorratsbehältern 7, die unterschiedliche Granulate 4 enthalten, hintereinander kurzzeitig wechselnde Granulate zuzufördern, sodass sich in der Praxis im Gegensatz zu den Figuren 3 bis 4 nicht ein, sondern mehrere Vorratsbehälter 7 nebeneinander befinden.

Das Fördern erfolgt mittels Ansaugen des Granulates 4 aus dem Vorratsbehälter 7 über eine Sauglanze 16 mittels Förderluft 3, die das angesaugte Granulat in der Förderluft von der Sauglanze 16 über eine meist als Schlauch ausgebildete Förderleitung 15 in den Granulatabscheider 1 befördert, der mit seiner unteren Ausgabeöffnung 31 oberhalb der gewünschten Bedarfsstelle, z.B. der Spritzgussmaschine, aufgebaut ist.

In diesem Fall besteht das Innere des Granulatabscheiders 1, der Granulat-Sammelbereich, aus dem Granulat-Zwischenbehälter 9 oben und dem darunter liegenden Granulat-Endbehälter 14, mit einer verschließbaren Granulatklappe 6 dazwischen.

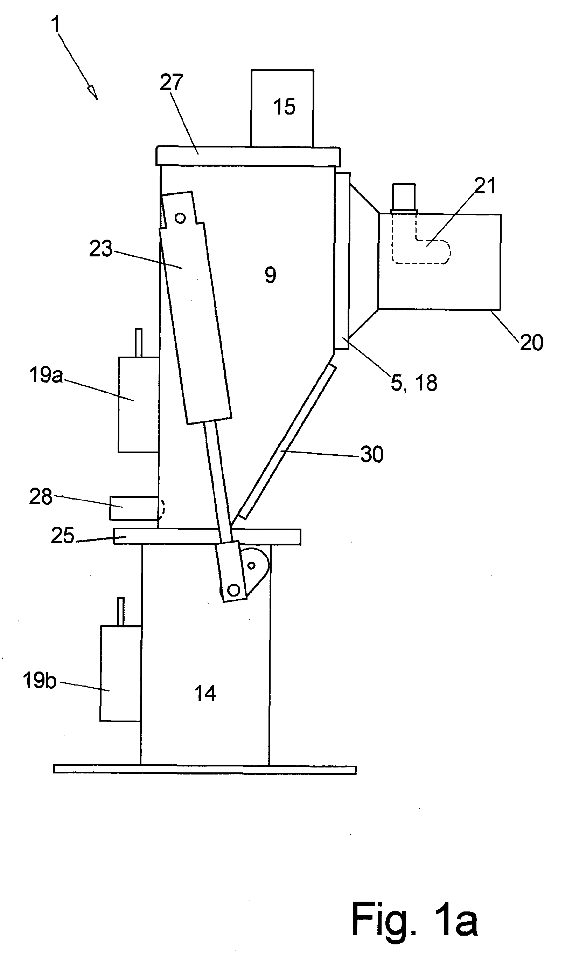

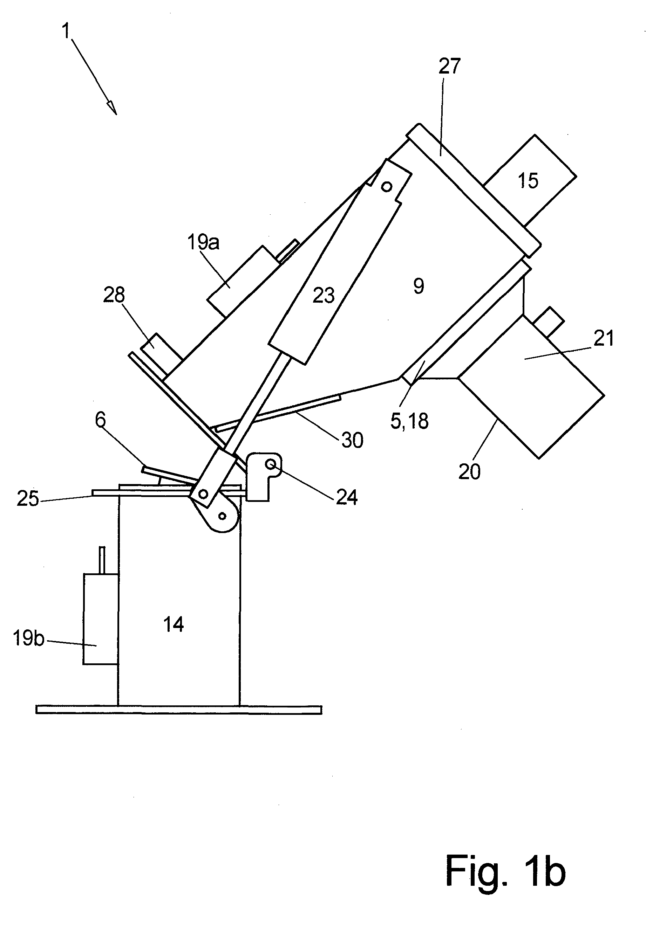

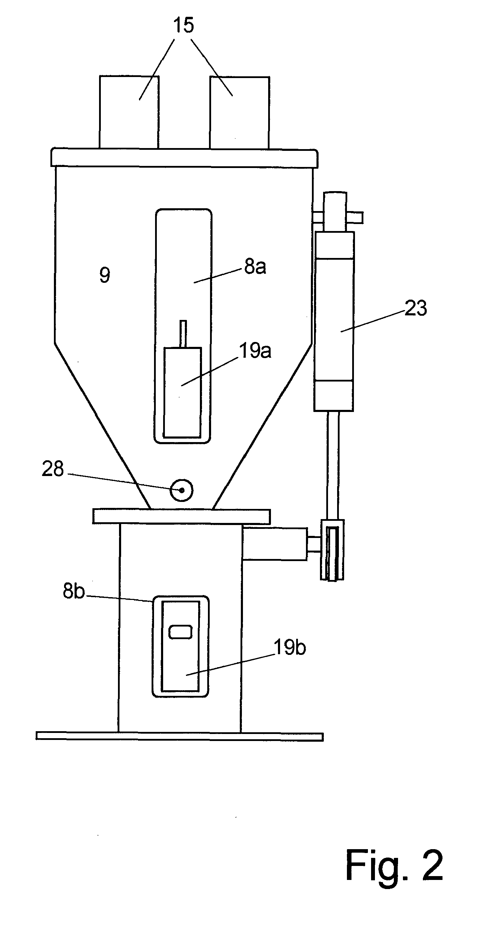

In diesem Fall mündet die Förderleitung 15 in der Oberseite des oberen Granulat-Zwischenbehälters 9, der - wie besser in den Figuren 1 und 2 erkennbar ist - als abnehmbarer Deckel 27 ausgebildet ist, und die Förderluft 3 verlässt den Granulat-Zwischenbehälter 9 durch eine in dessen Rückseite vorhandenen Auslassöffnung 18. Die Auslassöffnung 18 ist von einem Sieb 5 verschlossen, welches eine solche Maschenweite besitzt, dass es zwar von der Förderluft 5 und eventuell darin vorhandenen Staubanteilen leicht durchdrungen werden kann, nicht jedoch von dem Granulat 4, welches sich dementsprechend am Boden des Granulat-Zwischenbehälters 9 zunehmend ansammelt, solange die Granulatöffnung 25, die den Durchgang vom Granulat-Zwischenbehälter 9 zum darunter liegenden Granulatendbehälter 14 darstellt, durch die Granulatklappe 6 verschlossen ist, wie in Figur 3a dargestellt.

Von der Auslassöffnung 18 wird die Förderluft 3 über eine Staubleitung 20, die ebenfalls meist wieder als Schlauch ausgebildet ist, einem Staubsammelbehälter 12 zugeführt, in dessen Auslassöffnung sich ein Filter 2 zum Zurückhalten des Staubanteiles aus der Förderluft 3 befindet. Die Förderluft durchdringt somit den Filter 2 und tritt aus in die Umgebung, während sich der in der Staubleitung 20 in der Förderluft 3 noch enthaltene Staub 11 am Boden des Staubbehälters 12 absetzt.

Die gesamte Anlage wird mittels Druckluft betrieben, indem auch der Unterdruck, der für die Förderluft 3 benötigt wird, mittels Druckluft erzeugt wird, und zwar mittels eines Transportejektors 21, die beim Aufbau der Figur 3a am Beginn der Staubleitung 20, also im Staubableitungsstutzen, der am Granulatabscheider 1 angeordnet ist, vorgesehen ist:

Dabei handelt es sich um ein Winkelstück mit einer meist düsenförmigen Auslassöffnung, welches so in eine Seitenwand des Staubableitungs-Stutzens eingebaut ist, dass die Auslassöffnung dieses Transportejektors 21 mittig im meist runden Querschnitt des Stutzens angeordnet ist und Druckluft in Strömungsrichtung 10, also die Verlaufsrichtung der Staubleitung 20 in Richtung Staubsammelbehälter 12, abgibt, wodurch stromaufwärts des Transportejektors ein starker Unterdruck erzeugt wird, der über den Granulat-Zwischenbehälter 9 und die Förderleitung 15 bis in die Sauglanze 16 zurück wirkt und an deren freien offenen Ende ein Ansaugen von Granulat 4 im Vorratsbehälter 7 bewirkt.

Die dafür benötigte Druckluft wird von einer Druckluftquelle 17 zur Verfügung gestellt, die ein eigener Druckluftkompressor sein kann oder ein Anschluss an ein größeres Druckluftnetz. Die Abgabe der Druckluft an die einzelnen Stellen der Druckluftförderanlage wird von einer Steuerung 22 gesteuert:

Mit Druckluft wird nicht nur der Transportejektor 21 beliefert, sondern des Weiteren ein Aufwirbelungs-Ejektor 28, die im unteren Bereich des Granulat-Zwischenbehälters 9 in dessen Frontwand eingebaut ist und auf die schräg gestellte Rückwand des Granulat-Zwischenbehälters 9 gerichtet ist.

Mit Druckluft wird ferner die Granulatklappe 6 angesteuert, die die Granulat-öffnung 25 zwischen dem Granulat-Zwischenbehälter 9 und dem Granulat-Endbehälter 14 verschließt. Dabei ist bei fehlender Druckluftbeaufschlagung die Granulatklappe 6 im offenen Zustand und wird mittels Druckluftbeaufschlagung geschlossen.

Die Mündungen der ein oder mehreren Förderleitungen 15 in der Oberseite, nämlich dem Deckel 27, des Granulatabscheiders 1 sind mittels je einer Verschlussklappe 32 verschließbar, die schwerkraft-betätigt an der Unterseite der Auslassöffnung anliegt.

**Figur 3a** zeigt nun den Fördervorgang:

Dabei ist die Granulatklappe 6 mittels Druckluftbeaufschlagung geschlossen und über den Transportejektor 21 wird Druckluft über die zu diesen Druckluftdüsen 21 führende unverzweigte Druckluftleitung 26a eingeschossen.

Denn die aus dem Transportejektor 21 ausströmende Druckluft dient dem Aufbau des Unterdrucks in der Förderleitung 15 und damit dem Ansaugen des Granulates 4. Der Unterdruck stromaufwärts des Transportejektors 21 sorgt auch dafür, dass die schwerkraft-betätigte Verschlussklappe 32 sich öffnet, da dies die einzige Stelle des ansonsten geschlossenen Granulat-Zwischenbehälters 9 ist, aus der Luft nachströmen kann, die von dem Transportejektor 21 angesaugt wird.

Auf diese Art und Weise sammelt sich das Granulat 4 am Boden des Granulat-Zwischenbehälters 9 immer mehr an, während der in der Förderluft 3 vorhandene Staubanteil durch die Staubleitung 20 abgeführt wird.

Um die Entstaubung zu verbessern, wird - jedoch nicht während des Fördervorganges, und eventuell nur periodisch - Druckluft über den Aufwirbelungs-Ejektor 28 in das abgelagerte Granulat 4 eingeschossen und dieses erneut aufgewirbelt, sodass noch an den Granulatpartikeln anhaftender Staub wieder frei wird und über die Staubleitung 20 abgeführt werden kann. Dabei ist die Granulatklappe 6 geschlossen oder wird zeitgleich geöffnet.

Das Absaugen des Staubes erfolgt, indem auch dem Transportejektor 21 etwas Druckluft zugeführt wird, beide versorgt über die Leitungsverzweigung 33 und die Leitungen 26b, aber mit einer Drossel 13 im Ast zum Transportejektor 21.

Der Druckluftstrahl des Aufwirbelungs-Ejektors 28 ist dabei auf den schräg gestellten unteren Teil der Rückwand des Granulat-Zwischenbehälters 9 gerichtet, die dadurch einem starken Verschleiß unterliegt, weshalb sie von der Außenseite her durch eine Metallplatte 30 verstärkt ist.

Die Neigung der Rückwand im unteren Bereich ist dabei so bemessen, dass der von dort nach oben abgelenkte Druckluftstrahl weiter oben auf das im senkrechten Teil der Rückwand eingelassene Sieb 5 der Auslassöffnung 18 auftrifft, und dieses von anhaftenden Verschmutzungen, vorzugsweise anhaftendem Staub, ebenfalls befreit, sowohl durch direkt dort auftreffende Druckluft aus dem Aufwirbelungs-Ejektor 28 als auch durch von dieser mitgerissene und gegen das Sieb 5 geschleuderte Granulatpartikel.

Das Füllen des Granulat-Zwischenbehälters 9 erfolgt solange, bis der auf der Außenseite des durchsichtigen Fensters 8a in der Vorderwand des Granulat-Zwischenbehälters 9 angeordnete Füllstandssensor 19a einen ausreichenden Füllstand im Granulat-Zwischenbehälter 9 an die Steuerung 22 meldet und diese die Druckluftzufuhr zum Transportejektor 21 abschaltet.

Anschließend wird - wie in **Figur 3b** dargestellt - die Granulatklappe 6 geöffnet, wodurch das abgeschiedene Granulat vom Granulat-Zwischenbehälter 9 in den Granulat-Endbehälter 14 fällt und von dort durch die Auslassöffnung 31 in die Bedarfsstelle.

Bei diesem Vorgang kann zusätzlich wiederum durch die beiden Druckluftdüsen 21, 28 über die Leitungen 26b Druckluft eingeschossen werden, um während des Herabfallens des Granulates 4 ebenfalls wieder enthaltene Reste an Staub von den Granulatkörnern zu lösen und durch die Staubleitung 20 abzuführen. Die Verschlussklappe 32 bleibt dabei schwerkraftbedingt geschlossen, da ein Nachströmen von Luft aus dem Granulatendbehälter 14 möglich ist.

Anschließend schließt sich die Granulatklappe 6 wieder und der Vorgang gemäß Figur 3a beginnt von neuem.

In den Leitungen 26a,b sind jeweils Rückschlagventile eingebaut.

**Fig. 4** zeigt dabei ebenfalls den Fördervorgang, jedoch unterscheidet sich die Granulat-Förderanlage der Figur 4 von derjenigen der Figuren 3a und b dadurch, dass nunmehr ein Transportejektor 21 nicht nur unmittelbar hinter dem Sieb 5 in der Staubleitung 20 angeordnet ist, sondern zusätzlich und/oder statt dessen auch stromabwärts des Filters 2 am Staubsammelbehälter 12, um auch dort Unterdruck zu erzeugen.

Je nach den konkreten Verhältnissen wie Leitungsquerschnitten, Leitungslängen und dem Druck der Druckluft sowie dem Durchmesser der Druckluftdüse, kann der stromabwärts des Filters 2 angeordnete Transportejektor 21 auch die einzige den Unterdruck zur Verfügung stellende Druckluftdüse sein.

Dabei werden die beiden Transportejektoren 21 über eine verzweigte Leitung 26a versorgt, der übrige Aufbau ist identisch.

Neben den bereits beschriebenen Details des Granulatabscheiders 1 zeigen die **Figuren 1a****,** **1b** **und** **2** weitere konstruktive Merkmale:

So ist der Oberteil des Granulatabscheiders 1, also der Granulat-Zwischenbehälter 9 samt den Anschlussstutzen für zwei Förderleitungen 15 und eine Staubleitung 20 sowie der darin befestigte Transportejektor 21 als Oberteil gegenüber dem Unterteil, der im Wesentlichen den Granulat-Endbehälter 14 und die Granulatklappe 6 umfasst, abklappbar nach hinten um eine Achse 24 an der Rückseite des Granulatsammelbehälters.

Dadurch ist vor allem das Innere des Granulat-Endbehälters 14 für Reinigungszwecke gut zugänglich ohne den gesamten Granulatabscheider 1 von der darunter liegenden Maschine abbauen zu müssen.

Der Pneumatikzylinder 23, der mit dem freien Ende seiner Kolbenstange an einem die Granulatklappe 6 betätigenden Hebel befestigt ist, befindet sich seitlich an der Außenseite des Granulatabscheiders 1 und ist mit dem oberen Ende an dessen Granulat-Zwischenbehälter 9 befestigt.

Die Anordnung ist dabei so gewählt, dass beim Abklappen des Oberteiles nach hinten sich die Granulatklappe 6 über die Horizontale hinaus nach oben dreht und deshalb der Bereich darunter gut gereinigt werden kann, oder auch durch zusätzliche Beaufschlagung des Pneumatikzylinders 23 mit Druckluft die Granulatklappe 6 nach unten verschwenkt in den Granulatendbehälter 14 hinein verbracht werden kann.

Die Figur 2 zeigt ferner, dass auch im Granulatendbehälter 14 in der Frontwand ein Fenster 8b angeordnet ist, an dem ein Füllstandssensor 19b sitzt, der optisch den Füllstand in dem Granulatendbehälter 14 überwacht entsprechend der mit Granulat zu versorgenden Maschine.

### BEZUGSZEICHENLISTE

- 1: Granulatabscheider
- 2: Filter
- 3: Förderluft
- 4: Granulat
- 5: Sieb
- 6: Granulatklappe
- 7: Vorratsbehälter
- 8a,b: Fenster
- 9: Granulat-Zwischenbehälter
- 10: Strömungsrichtung
- 11: Staub
- 12: Staub-Sammelbehälter
- 13: Drossel
- 14: Granulat-Endbehälter
- 15: Förderleitung
- 16: Sauglanze
- 17: Druckluftquelle
- 18: Auslassöffnung
- 19a, b: Füllstandssensor
- 20: Staubleitung
- 21: Transportejektor
- 22: Steuerung
- 23: Pneumatikzylinder
- 24: Achse
- 25: Granulatöffnung
- 26a,b: Druckluftleitung
- 27: Deckel
- 28: Aufwirbelungs-Ejektor
- 29: Achse
- 30: Metallplatte
- 31: Ausgabeöffnung
- 32: Verschlussklappe
- 33: Leitungsverzweigung

## Patentansprüche

1. Granulatabscheider (1) mit Staubabscheidung für Druckluftförderer mit
- einem Filter (2), welcher von der Luft (3), aber nicht von Staub und Förderergut, insbesondere Granulat, durchdrungen werden kann,
- einem dem Filter (2) vorgelagerten Sieb (5), welches von der Fördererluft (3) und dem Staub (11) durchdrungen werden kann,
- wobei der Filter (2) in einem Staub-Sammelbehälter (12) abseits des Granulatsammelbereiches des Granulatabscheiders (1) angeordnet ist,
- wobei der Granulatsammelbereich ein Granulat-Zwischenbehälter (9) mit einer unteren Granulat-Öffnung (25) ist und zusätzlich
- ein Granulat-Endbehälter (14) unterhalb des Granulat-Zwischenbehälters (9) vorhanden ist, und
- dazwischen ein Zwischenverschluss (6), der die Granulat-Öffnung (25) verschließen kann, vorhanden ist,
**dadurch gekennzeichnet, dass**
- der Granulat-Zwischenbehälter (9) um eine horizontal liegende Achse (24) gegenüber dem Granulat-End behälter (14) klappbar ist.

2. Granulatabscheider nach Anspruch 1,
**dadurch gekennzeichnet, dass**
- der Zwischenverschluss, z. B. eine Granulat-Klappe (6), zwangsgesteuertert ist und/oder
- die eine horizontal liegende Achse (29) hinter der Granulatöffnung (25) angeordnet ist und/oder
- der Zwischenverschluss eine, am Granulat-Endbehälterer (14) befestigte Granulatklappe (6) ist.

3. Granulatabscheider nach Anspruche 2,
**dadurch gekennzeichnet, dass**
- die Granulatklappe (6) im geschlossenen Zustand von unten an der Granulat-Öffnung (25) anliegt und insbesondere angesteuert ist mittels einem mit Druckluft betriebenen Pneumatikzylinder, und/oder
- der Staub-Sammelbehälter (12) ein separater, vom Abscheider (1) getrennter und mit diesem über eine Staubleitung (20) insbesondere in Form eines Schlauches verbundener Behälter ist.

4. Granulatabscheider nach einem der vorhergehenden Ansprüche,
**dadurch gekennzeichnet, dass**
- in den Wänden und/oder der Granulat-Klappe (6) des Granulat-Zwischenbehälters (9), wenigstens eine Aufwirbelungs-Ejektor (28) angeordnet ist, und/oder
- der Auslaufbereich des Granulat-Zwischenbehälters (9), nach unten konisch zulaufende Wände besitzt und der Aufwirbelungs-Ejektor (28) gegenüber einer konischen Wand angeordnet ist, die auf der Außenseite durch eine aufgesetzte Metallplatte (30) im Auftreffbereich des Aufwirbelungs-Ejektors (28) verstärkt ist.

5. Granulatabscheider nach einem der vorhergehenden Ansprüche 3 oder 4,
**dadurch gekennzeichnet, dass**
- der Aufwirbelungs-Ejektor (28) und ein Transportejektor (21) mittels einer einfachen Leitungs-Verzweigung (33) von einem einzigen Ventil aus angesteuert werden, und in dem Zweig zum Transportejektor (21) eine Drossel (13) vorhanden ist, und/oder
- die Querschnittsfläche der Staubleitung (20) mindestens um den Faktor 1,0, besser mindestens um den Faktor 1,2, größer ist als die Querschnittsflächen der in den Abscheiders (1) hineinführenden FörderLeitung (15), insbesondere jedoch höchstens um den Faktor 7,0, besser höchstens um den Faktor 2,5.

6. Granulatabscheider nach Anspruch 5,
**dadurch gekennzeichnet, dass**
der freie Versorgungsquerschnitt, z. B. der Drossel (13), für den Transportejektor (21) mindestens um den Faktor 1,2, besser mindestens um den Faktor 1,5, kleiner ist als die Querschnittsfläche des Aufwirbelungs-Ejektors (28), insbesondere jedoch höchstens um den Faktor 3,0, besser höchstens um den Faktor 2,0.

7. Granulatabscheider nach einem der vorhergehenden Ansprüche,
**dadurch gekennzeichnet, dass**
der Granulat-Zwischenbehälter (9) auf der Oberseite von einem Deckel (27) verschlossen ist, der abnehmbar und insbesondere mittels Spannverschlüssen fixiert ist.

8. Granulatabscheider nach einem der vorhergehenden Ansprüche,
**dadurch gekennzeichnet, dass**
- eine Förderleitung (15) durch eine Verschlusseinrichtung, z. B. eine Verschlussklappe (32) oder ein Quetschventil verschließbar ist und insbesondere die Öffnungen der wenigstens einen Förderleitung (15) im Abscheider (1) eine insbesondere Schwerkraft-betätigte Verschlussklappe (32) aufweisen, und/oder
- das Sieb (5) in einem leicht demontierbaren, dicht anliegenden Rahmen auswechselbar befestigt ist.

9. Granulatabscheider nach einem der vorhergehenden Ansprüche,
**dadurch gekennzeichnet, dass**
im Granulatabscheider (1) wenigstens zwei Förder-Leitungen (15) münden zur Anlieferung unterschiedlicher Fördergute und insbesondere Verschlusseinrichtungen, insbesondere Verschlussklappen der FörderLeitungen (15) zwangsgesteuert durch eine Steuerung (22) sind.

10. Druckluft-Fördereranlage für Granulate und Mahlgut mit
- wenigstens einer Sauglanze (16),
- wenigstens einer Druckluftquelle (17),
- wenigstens einem Granulat-Abscheider (1) und
- wenigstens einer die Sauglanze (16) und den Abscheider (1) verbindenden Förderleitung (15),
**dadurch gekennzeichnet, dass**
der Granulatabscheider (1) nach einem der vorhergehenden Ansprüche ausgebildet ist.

## Claims

1. A granulate separator (1) with a dust separator for compressed air conveyors, comprising:
- a filter (2) which can be permeated by air (3), but not by dust and conveyed material, in particular granulate;
- a sieve (5) arranged upstream of the filter (2) which can be permeated by the conveyed air (3) and the dust (11);
- wherein the filter (2) is arranged in a dust collecting container (12) remote from the granulate collecting portion of the granulate separator (1)
- wherein the granulate collecting portion is a granulate intermediate container (9) with a lower granulate opening (25), and additionally;
- a granulate terminal container (14) is arranged below the granulate intermediate container (9), and
- wherein an intermediary closure (6) is provided which can close the granulate opening (25);
**characterized in that**
- the granulate intermediary container (9) is pivotable about a horizontal axis (24) relative to the granulate terminal container (14).

2. The granulate separator according to claim 1,
**characterized in that**
- the intermediary closure, e.g. a granulate flap (6), is positively controlled and/or
- a first horizontal axis (29) is arranged behind the granulate opening (25) and/or
- the intermediary closure is a granulate flap (6) that is attached at the granulate terminal container (14).

3. The granulate separator according to claim 2,
**characterized in that**
- the granulate flap (6) contacts the granulate opening (25) from below in a closed condition of the granulate flap and is controlled in particular by a compressed air operated pneumatic cylinder and/or
- the dust collecting container (12) is a separate container that is separate from the separator (1) and connected with the separator (1) through a dust conduit (20), in particular configured as a hose.

4. The granulate separator according to one of the preceding claims, **characterized in that**
- at least one turbulation ejector (28) is arranged in the walls and/or the granulate flap (6) of the granulate intermediary container (9), and/or
- the outlet portion of the granulate intermediary container (9) includes conically downward tapering walls and the turbulation ejector (28) is arranged opposite to a conical wall which is reinforced at an outside by an applied metal plate (30) in an impact portion of the turbulation ejector (28).

5. The granulate separator according to one of the preceding claims 3 or 4, **characterized in that**
- the turbulation ejector (28) and a transport ejector (21) are controlled by a simple conduit branch off (33) by a single valve and a throttle (13) is provided in the branch to the transport ejector (21) and/or
- the cross sectional surface of the dust conduit (20) is greater than cross sectional surfaces of the feed conduit (13) leading into the separator (1) at least by a factor of 1.0, better at least by a factor of 1.2, in particular, however, at the most by a factor of 7.0, better at least by a factor of 2.5.

6. The granulate separator according to claim 5,
**characterized in that**
the clear supply cross section, e.g. of the throttle (13) for the transport ejector (21) is smaller than a cross sectional surface of the turbulation ejector (28) at least by a factor of 1.2, better at least by a factor or 1.5, in particular however at the most by a factor or 3.0, better at the most by a factor of 2.0.

7. The granulate separator according to one of the preceding claims, **characterized in that** the granulate intermediary container (9) is closed on the top side by a cover (27) which is removable and fixated in particular by spring loaded closures.

8. The granulate separator according to one of the preceding claims, **characterized in that**
- a feed conduit (15) is closable by a closure device, e.g. a closure cap (32) or a crimp valve and in particular the openings of the at least one feed conduit (15) in the precipitator (1) include in particular a gravity actuated closure cap (32), and/or
- the sieve (5) is removably attached in an easily disengageable tight fitting frame.

9. The granulate separator according to one of the preceding claims, **characterized in that**
- at least two conveying conduits (15) lead into the granulate separator (1) for delivering different conveying materials and in particular closure devices, in particular closure caps of the conveying conduits (15) are positively controlled by a control (22).

10. A compressed air conveying arrangement for granulates and milling material, comprising:
- at least one suction lance (16),
- at least one compressed air source (17),
- a least one granulate separator, and
- at least one conveying conduit (15) connecting the suction lance (16) and the precipitator (1)
**characterized in that**
- the granulate separator (1) is configured according to one of the preceding claims.

## Revendications

1. Séparateur pour granulat (1) avec dépoussiérage pour convoyeur pneumatique avec :
- un filtre (2), qui peut être traversé par l'air (3), mais ni par la poussière ni par la matière à convoyer, notamment le granulat,
- un tamis (5), qui est placé en amont du filtre (2) et qui peut être traversé par l'air de convoyeur (3) et par la poussière (11),
- le filtre (2) étant agencé dans un récipient collecteur de poussière (12) à l'écart de la zone de collecte de granulat du séparateur pour granulat (1),
- la zone de collecte de granulat étant un récipient intermédiaire pour granulat (9) avec une ouverture inférieure pour granulat (25), et en outre
- un récipient final pour granulat (14) est prévu en dessous du récipient intermédiaire pour granulat (9)
- et un obturateur intermédiaire (6) est prévu entre eux, qui peut fermer l'ouverture pour granulat (25),
**caractérisé par le fait que** le récipient intermédiaire pour granulat (9) est rabattable, autour d'un axe (24) s'étendant horizontalement, par rapport au récipient final pour granulat (14).

2. Séparateur pour granulat selon la revendication 1, **caractérisé par le fait que**
- l'obturateur intermédiaire, par exemple un volet à granulat (6), est à commande forcée et/ou
- l'axe s'étendant horizontalement (**29**) est disposé derrière l'ouverture pour granulat (25) et/ou
- l'obturateur intermédiaire est un volet à granulat (6) fixé sur le récipient final pour granulat (14).

3. Séparateur pour granulat selon la revendication 2, **caractérisé par le fait que**
- à l'état fermé, le volet à granulat (6) s'appuie d'en bas contre l'ouverture pour granulat (25) et est commandé notamment au moyen d'un vérin pneumatique fonctionnant à air comprimé et/ou
- le récipient collecteur de poussière (12) est un récipient séparé, à l'écart du séparateur (1) et relié à celui-ci par l'intermédiaire d'une conduite de poussière (20) notamment sous forme de tuyau.

4. Séparateur pour granulat selon l'une des revendications précédentes, **caractérisé par le fait que**
- au moins un éjecteur à tourbillon (28) est disposé dans les parois et/ou dans le volet à granulat (6) du récipient intermédiaire pour granulat (9) et/ou
- la zone d'évacuation du récipient intermédiaire pour granulat (9) a des parois qui s'étendent en forme de cône vers le bas et l'éjecteur à tourbillon (28) est disposé en face d'une paroi conique qui est renforcée du côté extérieur par une plaque métallique (30) posée dans la zone d'impact de l'éjecteur à tourbillon (28).

5. Séparateur pour granulat selon l'une des revendications précédentes 3 ou 4, **caractérisé par le fait que**
- l'éjecteur à tourbillon (28) et un éjecteur de transport (21) sont commandés au moyen d'un simple branchement de conduite (33) à partir une seule vanne et un étrangleur (13) est prévu dans la branche menant à l'éjecteur de transport (21) et/ou
- la section transversale de la conduite de poussière (20) est supérieure au moins d'un facteur 1,0, et mieux au moins d'un facteur 1,2, aux sections transversales de la conduite de transport (15) menant dans le séparateur (1), mais notamment au plus d'un facteur 7,0, mieux au plus d'un facteur 2,5.

6. Séparateur pour granulat selon la revendication 5, **caractérisé par le fait que** la section d'alimentation libre, par exemple de l'étrangleur (13), pour l'éjecteur de transport (21) est inférieure au moins d'un facteur 1,2, mieux au moins d'un facteur 1,5, à la section transversale de l'éjecteur à tourbillon (28), mais notamment au plus d'un facteur 3,0, mieux au plus d'un facteur 2,0.

7. Séparateur pour granulat selon l'une des revendications précédentes, **caractérisé par le fait que** le récipient intermédiaire pour granulat (9) est fermé sur le côté supérieur par un couvercle (27) qui peut être enlevé et qui est fixé notamment au moyen de fermetures à genouillère.

8. Séparateur pour granulat selon l'une des revendications précédentes, **caractérisé par le fait que**
- une conduite de transport (15) peut être fermée par un dispositif de fermeture, par exemple un clapet (32) ou une vanne à manchon déformable, et les ouvertures d'au moins une conduite de transport (15) dans le séparateur (1) comportent en particulier un clapet (32) actionné notamment par gravité et/ou
- le tamis (5) est fixé, de manière à pouvoir être remplacé, dans un cadre facilement démontable et posé de façon étanche.

9. Séparateur pour granulat selon l'une des revendications précédentes, **caractérisé par le fait qu'**au moins deux conduites de transport (15) débouchent dans le séparateur pour granulat (1) pour apporter différentes matières à convoyer et **par le fait que** en particulier des dispositifs de fermeture, notamment des clapets, des conduites de transport (15) sont soumis à une commande forcée par une commande (22).

10. Installation de transport à air comprimé pour granulat et broyat avec
- au moins une lance d'aspiration (16),
- au moins une source d'air comprimé (17),
- au moins un séparateur pour granulat (1) et
- au moins une conduite de transport (15) reliant la lance d'aspiration (16) et le séparateur (1), **caractérisée par le fait que** le séparateur pour granulat (1) est conçu selon l'une des revendications précédentes.
